# EUROPEAN PATENT SPECIFICATION

(11) **EP 3 370 845 B1**
(45) Date of publication and mention of the grant of the patent: **03.05.2023**
(21) Application number: 16794674.8
(22) Date of filing: 02.11.2016
(51) Int. Cl.: B01D 33/23, B01D 33/74

(54) **FILTER ELEMENT FOR FILTER APPARATUS, ARRANGEMENT AND APPARATUS**
FILTERELEMENT FÜR FILTERVORRICHTUNG, ANORDNUNG UND VORRICHTUNG
ÉLÉMENT FILTRANT POUR APPAREIL DE FILTRATION, AGENCEMENT ET APPAREIL

(30) Priority: 03.11.2015 FI 20155799
(43) Date of publication of application: 12.09.2018
(73) Proprietor: Metso Outotec Finland Oy, 33900 Tampere (FI)
(72) Inventor: VÄNTTINEN, Kari, 02330 Espoo (FI); ILLI, Mika, 01700 Vantaa (FI); JUVONEN, Ismo, 55300 Rauha (FI); HINDSTRÖM, Rolf, 20810 Turku (FI)
(74) Representative: Papula Oy
(86) International application number: PCT/FI2016/050765
(87) International publication number: WO 2017/077185

(56) References cited:
- WO-A1-2014/108602
- WO-A1-2014/191634
- FR-A1- 2 595 957
- US-A- 3 291 312
- US-A- 4 152 267

## Description

### BACKGROUND

The present invention relates to a filter element of a disc filter apparatus.

The present invention further relates to an arrangement of a disc filter apparatus.

The present invention still further relates to a disc filter apparatus.

Filtration is a widely used process whereby a slurry or solid liquid mixture is forced through a media, with the solids retained on the media, as a cake, and the liquid phase passing through. This process is generally well understood in the industry. Examples of filtration types include depth filtration, pressure and vacuum filtration, and gravity and centrifugal filtration.

The most commonly used filter media for vacuum filters are filter cloths and coated media, e.g. the ceramic filter medium.

The use of a cloth filter medium requires heavy duty vacuum pumps, due to vacuum losses through the cloth during cake deliquoring. The ceramic filter medium, when wetted, does not allow air to pass through due to a capillary action. This decreases the necessary vacuum level, enables the use of smaller vacuum pumps and, consequently, yields significant energy savings.

The filter element is affected by slurry particles and extraneous compounds, especially in the field of dewatering of mineral concentrates. Therefore, the filter elements have to be regenerated. The filter element is periodically regenerated with the use of one or more of three different methods, for example: (1) backwashing, (2) ultrasonic cleaning, and (3) acid washing. Whereas the regenerative effect of backwashing and ultrasound are more or less mechanical, regeneration with acids is based on chemistry.

The regeneration with acids is performed by applying acid, i.e. typically acid-water -compound, by elevated pressure or positive pressure created in a backwashing equipment in the internal cavity. However, the pressure used in the regeneration may cause some of the connectors breaking or leaking.

The acid may spurt or spray through the broken connector out from the filter element and, in some circumstances, may create a risk for operators of the apparatus to be exposed to the acid.

It is to be noted, however, that the probability to the acid spurts or sprays is practically very low, but there is still a need for further increase already high user safety by protecting the operators from potential acid leakages.

US 4152267 discloses a rotary disc vacuum filter including detachably-mounted conduits rotating with a trunnion to provide flow communication between disc-shaped filter elements mounted on the trunnion and a valve applying suction to the filter elements, as well as ferrules for mounting the disc-shaped filter elements to the trunnion.

### BRIEF DESCRIPTION

The filter element of a disc filter apparatus, the arrangement of a disc filter apparatus, and the disc filter apparatus are characterized by what is stated in the independent claim(s). Some embodiments are disclosed in the dependent claims.

Viewed from an aspect, there can be provided a filter element of a disc filter according to claim 1.

Thereby a filter element the use of which is safe may be achieved.

Viewed from an aspect, there can be provided an arrangement of a disc filter according to claim 13.

Thereby an arrangement the use of which is safe may be achieved.

Viewed from an aspect, there can be provided a sleeve for placing an internal cavity of the filter element in a fluid communication with a drainage line of said disc filter apparatus, the sleeve comprising a proximal end for fastening to the drainage line, a distal end for inserting into an aperture arranged in the filter element, and a sealing arrangement being arrangeable between the aperture and the sleeve at a distance from an orifice of said aperture.

Thereby a sleeve the use of which is safe may be achieved.

Viewed from an aspect, there can be provided a disc filter apparatus comprising the above-mentioned arrangement.

Thereby a disc filter apparatus the use of which is safe may be achieved.

Some other embodiments are characterised by what is stated in the other claims. Further aspects are disclosed in the specification and drawings of this patent application. Features of the different embodiments of the invention may, within the scope of the basic inventive idea, be applied to other embodiments.

### BRIEF DESCRIPTION OF THE DRAWINGS

In the following the invention will be described in greater detail by means of preferred embodiments with reference to the attached [accompanying] drawings, in which
Figure 1 is a perspective top view illustrating a disc filter element,
Figure 2a is a cutaway view of a detail of the disc filter element shown in Figure 1,
Figure 2b is a cutaway view of a detail of another disc filter element,
Figure 3 is a perspective top cutaway view illustrating a disc filter element,
Figure 4 is a cutaway view of a detail of the disc filter element shown in Figure 3,
Figure 5 is a side view illustrating a disc filter apparatus, and
Figure 6 is a perspective top view illustrating the disc filter apparatus shown in Figure 5.

In the figures, some embodiments are shown simplified for the sake of clarity. Similar parts are marked with the same reference numbers in the figures.

### DETAILED DESCRIPTION

Principles of the embodiments can be applied for drying or dewatering fluid materials in any industrial processes, particularly in mineral and mining industries. In embodiments described herein, a material to be filtered is referred to as slurry, but embodiments are not intended to be restricted to this type of fluid material. The slurry may have high solids concentration, e.g. base metal concentrates, iron ore, chromite, ferrochrome, copper, gold, cobalt, nickel, zinc, lead and pyrite.

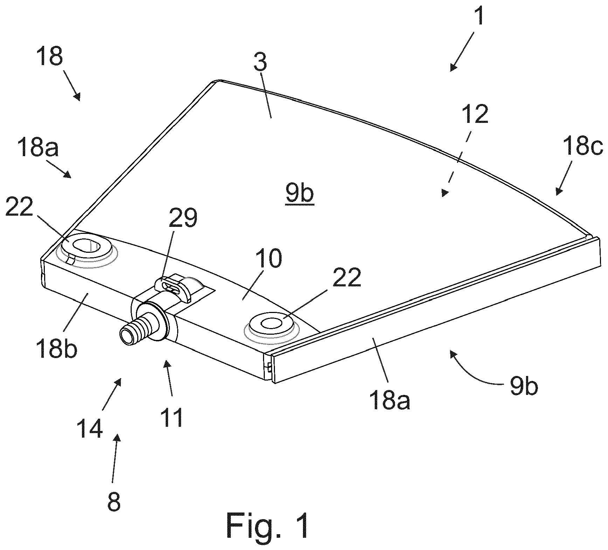

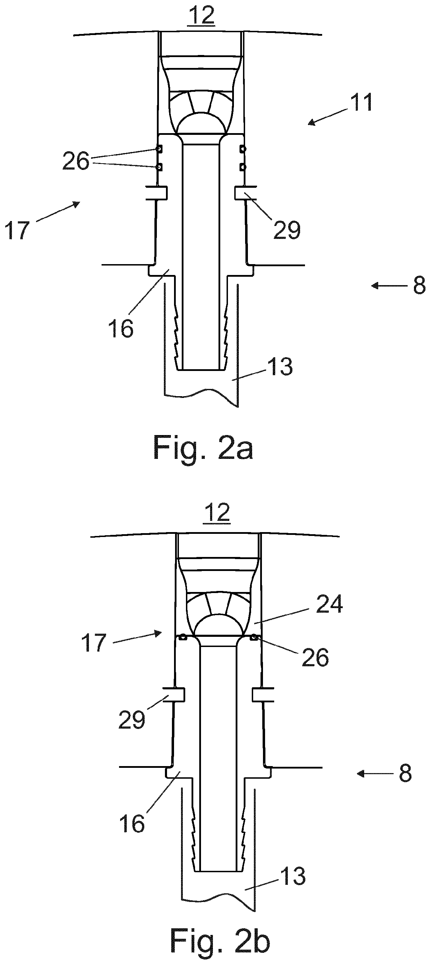

Figure 1 is a perspective top view illustrating a disc filter element, Figure 2a is a cutaway view of a detail of the disc filter element shown in Figure 1, and Figure 2b is a cutaway view of a detail of another disc filter element.

According to an embodiment, the filter element 1 may be a truncatedsector-shaped filter element 1 of a disc filter apparatus and comprising filter surfaces 9b on both sides of the element 1. Such a filter element is suitable for a disc filter apparatus. Thus, a complicated structure may be manufactured in an easier manner and/or a more uniform quality may be achieved by automatized manufacturing.

The filter member 3 may form a capillary filter. A capillary filter refers to a filter, wherein the structure and/or the material of the filter, such as the filter member 3, enables a certain amount of liquid, such as water, to be kept in the filter by a capillary action. The liquid may be kept in micro-pores provided in the filter member 3, for example. Such a capillary filter enables the liquid to be filtered to easily flow through the filter member 3, but when all free liquid has passed through the filter member 3, the remaining liquid kept in the filter by the capillary action prevents flow of gas, such as air, through the wet filter member 3. The capillary action thus does not participate in the dewatering itself, for instance by sucking water out of the slurry. In other words, in a capillary filter liquid, usually water, may be kept in the micro-pores of the filter member 3 by capillary forces and no flow of gas takes place after the free water in the residue, such as the cake, has been removed. According to an embodiment, the filter member 3 formed as a capillary filter prevents air from entering the internal cavity 12.

According to an embodiment, the bubble point of the filter member 3 is at least 0.2 bar. In this context, the bubble point refers to an effective bubble point. The effective bubble point describes a pressure difference between the outer and inner surfaces of the filter member 3, at which 1 liter of air flows through one square meter of the outer surface during a one minute time. In other words, when in such a filter member a 0.2 bar pressure difference is provided between the outside of the filter element 1 and the inside of the filter element 1, such as within the internal cavity 12, a maximum of 1 liter of air should be able to pass through a square meter of the second filter surface of the filter member 3 during a one minute time. If a flow of air through the filter member 3 at 1 liter per minute requires a pressure difference of 0.2 bar or greater, the bubble point of the filter member 3 is thus at least 0.2 bar. Thereby, in embodiments where it is not practical to block the flow of air completely, only a very minor amount of air may be able to flow through the filter member 3 when the cake is being dried. When the cake is being dried, an underpressure is provided within the filter element 1, such as within the internal cavity 12, which means than the pressure inside the filter element 1 is lower that the pressure outside the filter element 1.

For example, at least 600 liter of water per an hour and per one square meter of said outer surface may be able to pass through the filter member 3 when a pressure difference of 1 bar is provided between the outer and the inner surfaces of the filter member 3. Thus, a sufficient amount of water may flow through the filter member 3 to provide efficient filtering of the slurry, especially when the actual filtering takes place. During filtering, an underpressure is provided within the filter element 1, such as within the internal cavity 12, which means that the pressure inside the filter element 1 is lower than the pressure outside the filter element 1.

The pressure difference between the inside of the filter element 1 and the outside of the filter element 1 may be greater during the actual filtering than during the drying of the cake. The drying of the cake may take place for instance in a disc filter apparatus 2 when the filter element 1 in question has passed the filtering position, such as the lowest position in the filter 15 and rotated back upwards. In other words, a specific filter element 1 participates in the actual filtering at a different point of time and at a different position in the filter apparatus 2 than in the drying of the cake. Thus, the relevant pressure difference for the actual filtering and the drying of the cake may be different from one another.

The structure of the filter member 3, such as the mean pore size of the filter member 3, affects both the effective bubble point and the flow of water through the filter member 3.

The filter element 1 may further comprise a frame member 4 arranged to support the filter members 3 in such a manner that an internal cavity 12 is formed inside the filter element 1.

According to an embodiment, the frame member 4 may comprise a different material or combination of materials than the filter member(s) 3. According to an embodiment, the frame member 4 may have a thermal expansion coefficient different from that of the filter member 3.

According to an embodiment, the filter member 3 may comprise a material comprising micro-pores and the frame member 4 may comprise a material that does not comprise micro-pores. The frame member 4 may, thus, comprise a non-porous material. According to such an embodiment, filter elements 1 of more uniform quality may be provided, as this enables more automized work phases to be used instead. For instance manual coating, like painting for example, for closing the micro-pores in the parts of the frame member where the micro-pores are not beneficial or are not desirable can be avoided. According to an embodiment, the frame member 4 may comprise a material that does not let the liquid to be filtered through.

According to an example, the filter member 3 may comprise at least one of the following: a ceramic material or a composition comprising a ceramic material, a polymer material, a composition comprising a polymer material and a metal.

Using a ceramic material or a composition comprising a ceramic material in the filter member(s) 3, very good filtering properties may be achieved. According to an embodiment, the ceramic material may comprise alumina (Al₂O₃), aluminium silicates, silicon carbide and/or titania (TiO₂).

According to an example, the filter member 3 may comprise at least one of the following: a polymer material, a composition comprising a polymer material and a metal.

According to an embodiment, the frame member 4 may comprise a polymer material or a composition comprising a polymer material. This enables making the frame member 4 and, thus, the filter element 1 light, avoiding the frame absorbing water that would increase the weight of the frame member 4 and the filter element 1 in use and/or providing more flexibility in the frame member 4 and, therefore, the filter element 1. The polymer material may comprise a thermoplastic, for example. The thermoplastic may comprise at least one of the following: polyamide (PA), polysulphone (PSU), polyethersulphone (PES), polyphenylene oxide (PPO), polyphenylene sulphide (PPS), acrylo butadiene styrene (ABS), polybutylene terephthalatate (PBT), polycarbonate (PC), and polyolefins, such as polypropylene (PP), polyethylene (PP), e.g. high density polyethylene (HDPE). The thermoplastics may be particularly suitable for molding such frame member 4 structures. According to another example, the polymer material may comprise a thermoset plastic, for instance an epoxy, a polyurethane or a polyester.

According to a further example, the frame member may comprise metal.

The connecting member end 10 of a disc filter apparatus comprises a connecting member 22 in order to attach the filter element 1 to the filter apparatus 2. In the embodiment shown in Figure 1, the connecting member 22 comprises two fastening openings for attaching the filter element 1 to mounting means in the frame of the filter apparatus. The fastening openings are formed by the material of the connecting member end 10.

According to an example, the openings extend through the connecting member end 10. In other words, the openings are not blind holes.

According to an example, the total area of the filter member(s) 3 of one filter element 1 may be greater than or equal to 0.1 square meters. The total area of the filter member(s) 3 of one filter element 1 suitable for use in a disc filter apparatus may preferably be in the range of 0.1 square meters to 2 square meters, and more preferably in the range of 0.2 square meters to 1 square meters. Thus, such a filter element 1 can be sufficient for production environment.

The disc filter element 1 comprises an aperture 11 (shown in Figures 2a and 2b) arranged to extend inwards from an orifice 14 arranged on an outer surface of the filter element. The aperture 11 receives a connector 8 for placing the internal cavity 12 in a fluid communication with a drainage line 13 of the disc filter apparatus 2. The aperture 11 ends inside the filter element 1. Furthermore, the aperture 11 is connected to said internal cavity 12 of the filter element 1.

The aperture 11 is able to receive detachably a sleeve 16 connected to said drainage line 13 of the disc filter apparatus. Furthermore, there is a sealing arrangement 17 (shown in Figures 2a and 2b) arranged between the aperture 11 and the sleeve 16 and, furthermore, at a distance from said orifice 14.

According to the invention, the sealing arrangement 17 is attached to the aperture 11, i.e. to the filter element 1. An advantage is that the sealing arrangement 17 is automatically renewed together with renewing the filter element 1.

According to an example, the sealing arrangement 17 comprises at least one O-ring 26 that is a cheap and reliable type of seal.

According to an embodiment shown in Figure 2a, the sealing arrangement 17 is arranged between the orifice 14 and the distal end of the aperture 11.

According to another embodiment (shown in Figure 2b), the aperture 11 comprises a bottom ring 24 that extends in the distal end of the aperture 11 radially inwards. The bottom ring 24, however, does not close the distal end but leaves open a flow path in the internal cavity 12. The sealing arrangement 17 is arranged between said bottom ring 24 and its counterpart in the filter element 1.

The orifice 14 is arranged on peripheral edge surface 18b. An advantage is that the connector 8 does not increase, not at least notably, the thickness of the filter element 1.

In the embodiment shown in Figures 1 and 2, the orifice 14 is arranged on the inner edge surface 18b and between fastening openings arranged for attaching the filter element 1 to the disc filter apparatus. An advantage is that if the sealing arrangement 17 fails, the mounting means 39 (and the hubs 40, if any) arranged in the fastening openings will limit the zone affected by the leakage/flush. Thus the user safety of the filter apparatus can be increased.

As described earlier, the filter element 1 comprises a pair of side edge surfaces 18a which radiate respectively from the inner edge surface18b to the outer edge surface 18c. According to an embodiment, the aperture 11 is directed towards the crossing point of imaginary extensions of said side edge surfaces 18a. When this kind of filter element 1 is in its place in the disc filter apparatus, the aperture is directed towards the central shaft of the apparatus. An advantage is that if the sealing arrangement 17 fails, the resulting leakage or flush of washing acid is directed towards inner parts axle of the apparatus.

The aperture 11 or its inner surface may be formed directly to the material of the peripheral edge surface 18a, 18b, 18c, at least in case said material is non-porous. An advantage is that the structure is very simple. In the embodiment shown in Figures 1 and 2, the aperture 11 is formed by the material of the connecting member end 10.

According to another example, the aperture is formed in a separately manufactured bush or insert that is attached to the material of the peripheral edge surface 18a, 18b, 18c. This is especially suitable if the material of said peripheral edge surface 18a, 18b, 18c is porous.

According to an embodiment, the aperture 11 comprises a polymer material. An advantage is that surfaces fulfilling high dimensional accuracy requirements can be made. Of course, it is possible to form the aperture 11 from some another group of materials, e.g. ceramics or metals.

The polymer material may comprise thermoplastic material. An advantage is that it is possible to manufacture complicated and accurate products e.g. by injection moulding or transfer moulding.

The thermoplastic material may comprise e.g. polyamide (PA) or polyolefin, such as polypropylene (PP). These materials are inexpensive and easy to use. Other thermoplastics to be mentioned here as the material of the aperture 11 are polysulphone (PSU), polyethersulphone (PES), polyphenylene oxide (PPO), polyphenylenen sulphide (PPS) and acrylo butadiene styrene (ABS).

According to an example, the polymer material may comprise a thermoset plastic, for instance an epoxy, polyurethane or polyester

According to an embodiment, the connector 8 comprises a locking member locking the aperture 11 and the sleeve 16 to each other. The locking member may be e.g. a spline 29 as shown in Figure 1. An advantage is that the locking is simple to use and the correctness of the attachment is easy to verify.

There are several advantages in the connector 8 described above. Firstly, the contact surfaces to be sealed are limited because there is only one orifice 14 in the filter element 1. Secondly, in case the sealing arrangement 17 fails, leakage or flush of acid out from the filter element would direct mainly to direction of the aperture 11, i.e. in direction towards the inner parts of the filter apparatus, not outwards, i.e. in direction where operators of the filter apparatus are usually working.

The aperture 11 shown in the Figures has a round profile. However, the aperture may have some alternative profile, e.g. oval, polygon, such as rectangular, etc. Said alternative profiles may have an advantage that the cross-sectional area of the aperture 11 can be enlarged without growing the thickness of the frame member 4. According to an example, the cross-sectional area of the aperture 11 is 1 cm² - 10 cm² depending e.g. of the size of the filter element 1.

The frame member 4, e.g. the connecting member end 10, may comprise identification information for filter element 1 identification purposes. The identification information may comprise e.g. identification code or serial number or other written information, or just colour code informing the type or classification of the filter element 1. The identification information is especially convenient to include in a portion of the frame member 4 made of plastic, such as plasticmade connecting member end 10. The plastic may be e.g. tinted by due colour, and the written information produced by methods known *per se*.

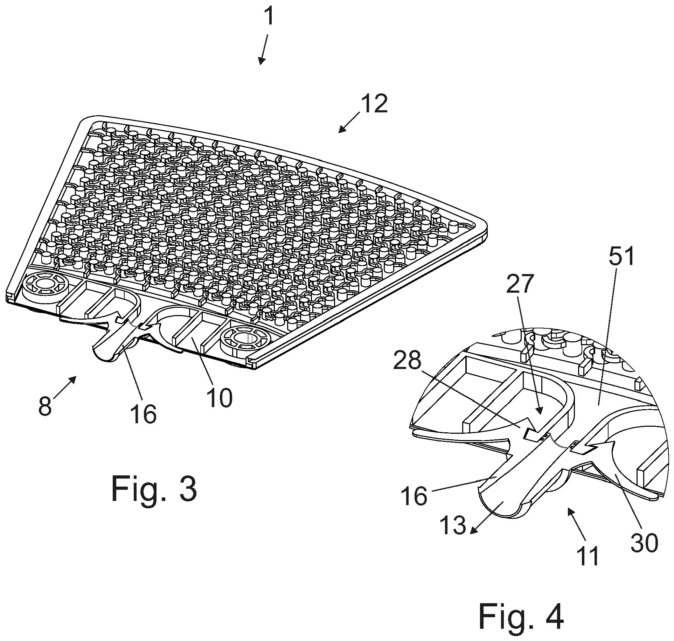

Figure 3 is a perspective top cutaway view illustrating a disc filter element, and Figure 4 is a cutaway view of a detail of the disc filter element shown in Figure 3.

According to an embodiment, the aperture 11 is connected to the internal cavity 12 by a distributing channel 51 that joins to the internal cavity 12 at least essentially as broad as said internal cavity 12 and that gradually converges to the aperture 11. The distributing channel 51 is essentially free from any flow obstacles. An advantage of the distributing channel 51 is very low flow resistance.

According to an example, the distributing channel 51 is created as an integral part of the frame member 4. In the embodiment shown in Figures 3 and 4, the distributing channel 51 is arranged in the connecting member end 10 of the filter element.

According to an embodiment, the aperture 11 comprises a first locking shape 27 whereas the sleeve 16 comprises a second locking shape 28. The locking shapes 27, 28 are arranged to lock the sleeve 16 detachable within the aperture 11. Thus there is definite means for attaching the aperture 11 into drainage line 13.

According to an embodiment, the connector 8 or the filter element 1 comprises a quick-release arrangement 30 arranged to release the first locking shape 27 from the second locking shape 28. An advantage is that the locking is easy and simple to do without using any tools.

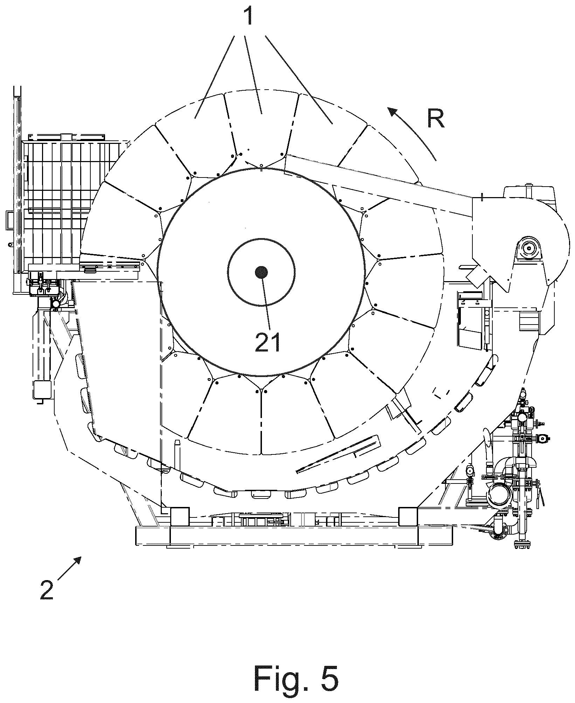

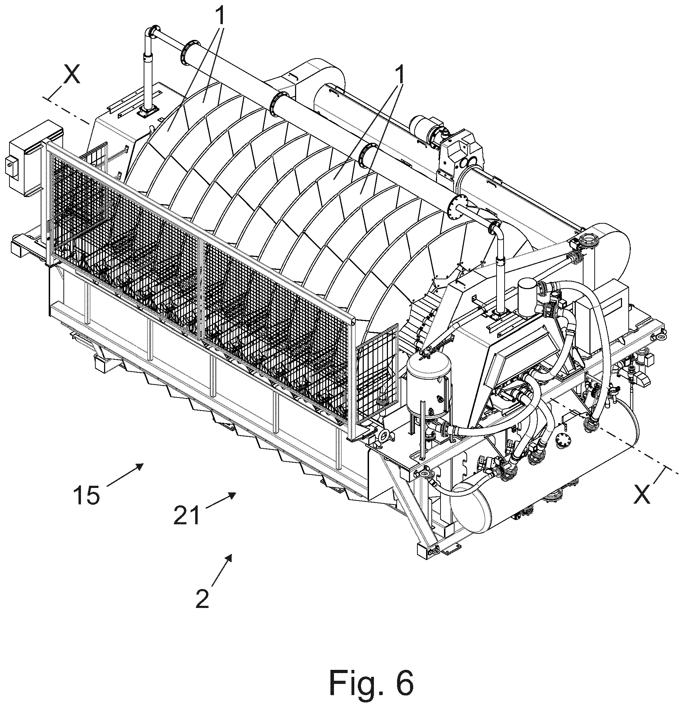

Figure 5 is a side view illustrating a disc filter apparatus, and Figure 6 is a perspective top view illustrating the disc filter apparatus shown in Figure 5.

The filter apparatus 2 comprises a filter 15 consisting of several consecutive co-axial filter discs arranged in line co-axially around the central shaft 21 of the filter 15.

The filter 15 is supported by bearings on a frame of the filter apparatus and is rotatable about the longitudinal axis of the central shaft 21 such that the lower portion of the filter 15 is submerged in a slurry basin located below the filter 15. The filter is rotated by e.g. an electric motor.

The number of the filter discs may range from 2 to 20, for example. The filter apparatus shown in Figure 5 comprises twelve (12) filter discs. The outer diameter of the filter 15 may be ranging from 1.5 m to 4 m, for example. Examples of commercially available disc filters include Ceramec CC filters, models CC-6, CC-15, CC-30, CC-45, CC-60, CC-96 and CC-144 manufactured by Outotec Inc.

All the filter discs can be preferably essentially similar in structure. Each filter disc may be formed of a number of individual sector-shaped filter elements 1 discussed earlier in this description. The filter elements 1 are mounted circumferentially in a radial planar plane around the central shaft 21 to form an essentially continuous and planar disc surface. The number of the filter plates in one filter disc may be 12 or 15, for example.

As the central shaft 21 is fitted so as to revolve, each filter element 1 is, in its turn, displaced into a slurry basin and further, as the central shaft 21 revolves, rises out of the basin. As the filter member 3 is submerged in the slurry basin, the cake forms onto the filter member 3 under the influence of the vacuum. Once the filter element 1 comes out of the basin, pores of the filter member 3 are emptied as the cake is deliquored for a predetermined time which is essentially limited by the rotation speed of the disc. The cake can be discharged by e.g. scraping, after which the cycle begins again. Operation of the disc filter apparatus may be controlled by a filter control unit, such as a Programmable Logic Controller, PLC.

According to an aspect, in the filter element, the sealing arrangement comprises at least one O-ring.

It will be obvious to a person skilled in the art that, as the technology advances, the inventive concept can be implemented in various ways. The invention and its embodiments are not limited to the examples described above but may vary within the scope of the claims.

## Claims

1. A filter element (1) for a disc filter apparatus (2), the filter element comprising
a filter member (3) comprising a filter surface (9b),
an aperture (11) for placing an internal cavity (12) of the filter element in a fluid communication with a drainage line (13) of the disc filter apparatus,
the aperture being arranged to extend inwards from an orifice (14) arranged on an outer surface of the filter element and to end inside the filter element,
the aperture being in fluid contact with said internal cavity of the filter element,
the aperture being arranged to receive detachably a sleeve (16) connected to said drainage line of the disc filter apparatus,
the filter element comprising a pair of side edge surfaces (18a) which radiate respectively from an inner edge surface (18b) to an outer edge surface (18c), and the aperture being arranged on one of the peripheral edge surfaces (18a, 18b, 18c), **characterized in that**
a sealing arrangement (17) is attached to the aperture at a distance from said orifice in such a manner that the sealing arrangement is configured to be arranged between the aperture and the sleeve, when the sleeve is received in the aperture, and
that the orifice is arranged on the inner edge surface (18b) and between fastening openings arranged for attaching the filter element to the disc filter apparatus.

2. The filter element (1) according to claim 1, wherein the filter member (3) is a capillary action filter member.

3. The filter element (1) according to claim 2, wherein the bubble point of the filter member (3) is at least 0.2 bar.

4. The filter element (1) according to any one of the preceding claims, comprising filter members (3) on both sides of the element (1).

5. The filter element (1) according to any one of the preceding claims, wherein the aperture (11) being directed towards the crossing point of imaginary extensions of the side edge surfaces (18a).

6. The filter element (1) according to claim 5, wherein the aperture (11) is arranged on an inner edge surface (18b) and between fastening means arranged for attaching the filter element (1) to the disc filter apparatus (2).

7. The filter element (1) according to any one of the preceding claims, wherein the aperture (11) comprises a polymer material.

8. The filter element (1) according to any one of the preceding claims, the aperture (11) being formed from the material of the peripheral edge surface (18a, 18b, 18c).

9. The filter element (1) according to any one of the preceding claims, wherein the material of the peripheral edge surface (18a, 18b, 18c) is non-porous.

10. The filter element (1) according to any one of the preceding claims, wherein the filter member (3) comprises a ceramic material or a composition comprising a ceramic material.

11. The filter element (1) according to any one of the preceding claims, wherein the aperture (11) comprises a bottom ring (24) extending in the distal end of the aperture radially inwards, and that
the sealing arrangement (17) is attached to said bottom ring.

12. The filter element (1) according to any one of the preceding claims, comprising
a distributing channel (51) arranged in fluid communication with the internal cavity (12) for placing this in fluid communication with the aperture (11),
the distributing channel being at least essentially as broad as said internal cavity and gradually converging to the aperture, and
the volume of the distributing channel being free from structures of flow obstacles.

13. An arrangement for a disc filter apparatus (2), the arrangement comprising
a filter element (1) according to any one of the preceding claims, and
a sleeve (16) detachably arrangeable in the aperture (11) and connected to said drainage line (13) of the disc filter apparatus (2),
wherein
the sealing arrangement is arranged between the aperture (11) and the sleeve (16) and at a distance from said orifice (14).

14. The arrangement according to claim 13, wherein the sealing arrangement is arranged between an inner wall of the aperture (11) and an outer periphery of the sleeve (16).

15. The arrangement according to claim 13, wherein the aperture (11) comprises a bottom ring (24) extending from the inner wall of the aperture (11) radially inwards,
the sleeve (16) comprises a distal end, and that
the sealing arrangement is arranged between said bottom ring (24) and a surface of said distal end.

16. The arrangement according to any one of claims 13 - 15, wherein the aperture (11) comprises a first locking shape (27) and the sleeve (16) comprises a second locking shape (28), said locking shapes being arranged to lock the sleeve (16) detachable within the aperture (11).

17. The arrangement according to claim 16, wherein the first locking shape (27) and the second locking shape (28) are arranged to receive a locking member locking the locking shapes to each other.

18. The arrangement according to claim 16 or 17, wherein the filter element (1) comprises a quick-release arrangement (30) arranged to release the first locking shape (27) from the second locking shape (28).

19. A disc filter apparatus (2), comprising the arrangement according to claim 13.

## Patentansprüche

1. Filterelement (1) für eine Scheibenfiltervorrichtung (2), wobei das Filterelement
ein Filterglied (3), das eine Filteroberfläche (9b) umfasst,
eine Blende (11), um einen inneren Hohlraum (12) des Filterelements in eine Fluidverbindung mit einer Drainageleitung (13) der Scheibenfiltervorrichtung zu bringen, umfasst,
wobei die Blende so angeordnet ist, dass sie sich von einer an einer Außenoberfläche des Filterelements angeordneten Öffnung (14) nach innen erstreckt und im Inneren des Filterelements abschließt,
wobei die Blende in Fluidkontakt mit dem inneren Hohlraum des Filterelements steht,
wobei die Blende so angeordnet ist, dass sie eine Hülse (16) abnehmbar aufnimmt, die mit der Drainageleitung der Scheibenfiltervorrichtung verbunden ist,
wobei das Filterelement ein Paar seitlicher Kantenoberflächen (18a) umfasst, die jeweils von einer inneren Kantenoberfläche (18b) strahlenförmig zu einer äußeren Kantenoberfläche (18c) verlaufen, und die Blende an einer der umfangseitigen Kantenoberflächen (18a, 18b, 18c) angeordnet ist, **dadurch gekennzeichnet, dass**
eine Dichtungsanordnung (17) an der Blende in einem Abstand von der Öffnung derart angebracht ist, dass die Dichtungsanordnung dazu ausgestaltet ist, zwischen der Blende und der Hülse angeordnet zu sein, wenn die Hülse in der Blende aufgenommen ist, und
dass die Öffnung an der inneren Kantenoberfläche (18b) und zwischen Befestigungsöffnungen angeordnet ist, die zum Anbringen des Filterelements an der Scheibenfiltervorrichtung angeordnet sind.

2. Filterelement (1) nach Anspruch 1, wobei das Filterglied (3) ein Filterglied mit Kapillarwirkung ist.

3. Filterelement (1) nach Anspruch 2, wobei der Blasenpunkt des Filterelements (3) mindestens 0,2 bar beträgt.

4. Filterelement (1) nach einem der vorhergehenden Ansprüche, umfassend Filterglieder (3) auf beiden Seiten des Elements (1).

5. Filterelement (1) nach einem der vorhergehenden Ansprüche, wobei die Blende (11) auf den Kreuzungspunkt der gedachten Verlängerungen der seitlichen Kantenoberflächen (18a) gerichtet ist.

6. Filterelement (1) nach Anspruch 5, wobei die Blende (11) an einer inneren Kantenoberfläche (18b) und zwischen Befestigungsmitteln angeordnet ist, die zum Anbringen des Filterelements (1) an der Scheibenfiltervorrichtung (2) angeordnet sind.

7. Filterelement (1) nach einem der vorhergehenden Ansprüche, wobei die Blende (11) ein Polymermaterial umfasst.

8. Filterelement (1) nach einem der vorhergehenden Ansprüche, wobei die Blende (11) aus dem Material der umfangseitigen Kantenoberfläche (18a, 18b, 18c) gebildet ist.

9. Filterelement (1) nach einem der vorhergehenden Ansprüche, wobei das Material der umfangseitigenKantenoberfläche (18a, 18b, 18c) nicht-porös ist.

10. Filterelement (1) nach einem der vorhergehenden Ansprüche, wobei das Filterglied (3) ein keramisches Material oder eine ein keramisches Material enthaltende Zusammensetzung aufweist.

11. Filterelement (1) nach einem der vorhergehenden Ansprüche, wobei die Blende (11) einen unteren Ring (24) umfasst, der sich im distalen Ende der Blende radial nach innen erstreckt, und wobei
die Dichtungsanordnung (17) an dem unteren Ring angebracht ist.

12. Filterelement (1) nach einem der vorhergehenden Ansprüche, umfassend
einen Verteilungskanal (51), der in Fluidverbindung mit dem inneren Hohlraum (12) angeordnet ist, um diesen in Fluidverbindung mit der Blende (11) zu bringen,
wobei der Verteilungskanal mindestens im Wesentlichen so breit wie der innere Hohlraum ist und sich zur Blende hin verjüngt, und
wobei das Volumen des Verteilungskanals frei von Strukturen von Strömungshindernissen ist.

13. Anordnung für ein Scheibenfiltergerät (2), wobei die Anordnung
ein Filterelement (1) nach einem der vorhergehenden Ansprüche und
eine Hülse (16), die abnehmbar in der Blende (11) anordenbar ist und mit der Drainageleitung (13) der Scheibenfiltervorrichtung (2) verbunden ist, umfasst, wobei
die Dichtungsanordnung zwischen der Blende (11) und der Hülse (16) und in einem Abstand von der Öffnung (14) angeordnet ist.

14. Anordnung nach Anspruch 13, wobei die Dichtungsanordnung zwischen einer Innenwand der Blende (11) und einem äußeren Umfang der Hülse (16) angeordnet ist.

15. Anordnung nach Anspruch 13, wobei die Blende (11) einen unteren Ring (24) umfasst, der sich von der Innenwand der Blende (11) radial nach innen erstreckt,
wobei die Hülse (16) ein distales Ende umfasst, und wobei
die Dichtungsanordnung zwischen dem unteren Ring (24) und einer Oberfläche des distalen Endes angeordnet ist.

16. Anordnung nach einem der Ansprüche 13-15, wobei die Blende (11) eine erste Verriegelungsform (27) umfasst und die Hülse (16) eine zweite Verriegelungsform (28) umfasst, wobei die Verriegelungsformen so angeordnet sind, dass sie die innerhalb der Blende (11) abnehmbare Hülse (16) verriegeln.

17. Anordnung nach Anspruch 16, wobei die erste Verriegelungsform (27) und die zweite Verriegelungsform (28) so angeordnet sind, dass sie ein Verriegelungsglied aufnehmen, das die Verriegelungsformen miteinander verriegelt.

18. Anordnung nach Anspruch 16 oder 17, wobei das Filterelement (1) eine Schnelllöseanordnung (30) umfasst, die so angeordnet ist, dass sie die erste Verriegelungsform (27) von der zweiten Verriegelungsform (28) löst.

19. Scheibenfiltervorrichtung (2), umfassend die Anordnung nach Anspruch 13.

## Revendications

1. Elément filtrant (1) pour un appareil de filtrage à disques (2), l'élément filtrant comprenant
un élément filtrant (3) comprenant une surface filtrante (9b),
une ouverture (11) destinée à placer une cavité interne (12) de l'élément filtrant en communication fluidique avec une conduite de drainage (13) de l'appareil de filtrage à disques,
l'ouverture étant agencée pour s'étendre vers l'intérieur depuis un orifice (14) agencé sur une surface extérieure de l'élément filtrant et pour aboutir à l'intérieur de l'élément filtrant,
l'ouverture étant en contact fluidique avec ladite cavité interne de l'élément filtrant,
l'ouverture étant agencée pour recevoir de manière amovible un manchon (16) relié à ladite conduite de drainage de l'appareil de filtrage à disques,
l'élément filtrant comprenant une paire de surfaces de bord latéral (18a) qui rayonnent respectivement d'une surface de bord intérieur (18b) vers une surface de bord extérieur (18c), et l'ouverture étant disposée sur l'une des surfaces de bord périphérique (18a, 18b, 18c), **caractérisé en ce que**
un dispositif d'étanchéité (17) est fixé à l'ouverture à une certaine distance dudit orifice de telle manière que le dispositif d'étanchéité est configuré pour être disposé entre l'ouverture et le manchon, lorsque le manchon est reçu dans l'ouverture, et
que l'orifice est disposé sur la surface de bord intérieur (18b) et entre des ouvertures de fixation disposées pour fixer l'élément filtrant au dispositif de filtration à filtre à disques.

2. Elément filtrant (1) selon la revendication 1, dans lequel l'élément filtrant (3) est un élément filtrant à action capillaire.

3. Elément filtrant (1) selon la revendication 2, dans lequel le point de bulle de l'élément filtrant (3) est d'au moins 0,2 bar.

4. Elément filtrant (1) selon l'une quelconque des revendications précédentes, comprenant des éléments filtrants (3) sur les deux côtés de l'élément (1).

5. Elément filtrant (1) selon l'une quelconque des revendications précédentes, dans lequel l'ouverture (11) est dirigée vers le point de croisement des extensions imaginaires des surfaces des bords latéraux (18a).

6. Elément filtrant (1) selon la revendication 5, dans lequel l'ouverture (11) est agencée sur une surface de bord intérieur (18b) et entre des moyens de fixation agencés pour fixer l'élément filtrant (1) au dispositif de filtration à filtre à disques (2).

7. Elément filtrant (1) selon l'une quelconque des revendications précédentes, dans lequel l'ouverture (11) comprend un matériau polymère.

8. Elément filtrant (1) selon l'une quelconque des revendications précédentes, l'ouverture (11) étant formée à partir du matériau de la surface de bord périphérique (18a, 18b, 18c).

9. Elément filtrant (1) selon l'une quelconque des revendications précédentes, dans lequel le matériau de la surface de bord périphérique (18a, 18b, 18c) est non poreux.

10. Elément filtrant (1) selon l'une quelconque des revendications précédentes, dans lequel l'élément filtrant (3) comprend un matériau céramique ou une composition comprenant un matériau céramique.

11. Elément filtrant (1) selon l'une quelconque des revendications précédentes, dans lequel l'ouverture (11) comprend une bague inférieure (24) s'étendant dans l'extrémité distale de l'ouverture radialement vers l'intérieur, et
le dispositif d'étanchéité (17) est fixé à ladite bague inférieure.

12. Elément filtrant (1) selon l'une quelconque des revendications précédentes, comprenant
un canal de distribution (51) disposé en communication fluidique avec la cavité interne (12) pour placer celle-ci en communication fluidique avec l'ouverture (11),
le canal de distribution étant au moins essentiellement aussi large que ladite cavité interne et convergeant progressivement vers l'ouverture, et
le volume du canal de distribution étant exempt de structures d'obstacles à l'écoulement.

13. Agencement pour un appareil de filtrage à disques (2), l'agencement comprenant
un élément filtrant (1) selon l'une quelconque des revendications précédentes, et un manchon (16) pouvant être disposé de manière amovible dans l'ouverture (11) et relié à ladite conduite de drainage (13) de l'appareil de filtrage à disques (2),
dans lequel
le dispositif d'étanchéité est disposé entre l'ouverture (11) et le manchon (16) et à une certaine distance dudit orifice (14).

14. Agencement selon la revendication 13, dans lequel le dispositif d'étanchéité est disposé entre une paroi intérieure de l'ouverture (11) et une périphérie extérieure du manchon (16).

15. Agencement selon la revendication 13, dans lequel l'ouverture (11) comprend une bague inférieure (24) s'étendant depuis la paroi intérieure de l'ouverture (11) radialement vers l'intérieur,
le manchon (16) comprend une extrémité distale, et
le dispositif d'étanchéité est disposé entre ladite bague inférieure (24) et une surface de ladite extrémité distale.

16. Agencement selon l'une quelconque des revendications 13 à 15, dans lequel l'ouverture (11) comprend une première forme de verrouillage (27) et le manchon (16) comprend une seconde forme de verrouillage (28), lesdites formes de verrouillage étant agencées pour verrouiller le manchon (16) détachable dans l'ouverture (11).

17. Agencement selon la revendication 16, dans lequel la première forme de verrouillage (27) et la seconde forme de verrouillage (28) sont agencées pour recevoir un élément de verrouillage verrouillant les formes de verrouillage l'une à l'autre.

18. Agencement selon la revendication 16 ou 17, dans lequel l'élément filtrant (1) comprend un agencement de libération rapide (30) agencé pour libérer la première forme de verrouillage (27) de la seconde forme de verrouillage (28).

19. Appareil de filtrage à disques (2), comprenant l'agencement selon la revendication 13.
